# EUROPEAN PATENT SPECIFICATION

(11) **EP 1 612 033 B1**
(45) Date of publication and mention of the grant of the patent: **03.12.2008**
(21) Application number: 05105548.1
(22) Date of filing: 22.06.2005
(51) Int. Cl.: B29D 30/24, B29D 30/26

(54) **Segment cover plate for tire building drum**
Segmentabdeckplatte für eine Reifenaufbautrommel
Recouvrement d'un segment pour un tambour d'enroulement des pneus

(30) Priority: 30.06.2004 US 881117
(43) Date of publication of application: 04.01.2006
(73) Proprietor: The Goodyear Tire & Rubber Company, Akron, OH 44316-0001 (US)
(72) Inventor: Kitz, Steven Leonard, Tallmadge, OH Ohio 44278 (US); Lake, Steven Joseph, North Canton, OH Ohio 44720 (US); Phippen, Steven John, Napanee, Ontario K7R 2H4 (CA)
(74) Representative: Kutsch, Bernd

(56) References cited:
- US-A- 3 932 256
- PATENT ABSTRACTS OF JAPAN vol. 2000, no. 02, 29 February 2000 (2000-02-29) & JP 11 309790 A (SUMITOMO RUBBER IND LTD), 9 November 1999 (1999-11-09)
- PATENT ABSTRACTS OF JAPAN vol. 1997, no. 02, 28 February 1997 (1997-02-28) & JP 08 258180 A (MORI TEKKOSHO:KK), 8 October 1996 (1996-10-08)
- PATENT ABSTRACTS OF JAPAN vol. 010, no. 044 (M-455), 21 February 1986 (1986-02-21) & JP 60 196330 A (BRIDGESTONE KK), 4 October 1985 (1985-10-04)

## Description

### Field of the Invention

The present invention relates to a tire building drum, to a cover plate for use with a tire building drum and to the use of the tire building drum.

### Background of the Invention

All terrain vehicle tires, aircraft tires and other tires have relatively longer sidewalls as compared to passenger tires. The longer sidewalls result in a longer chord length (i.e., the bead to bead distance) as compared to passenger tires. A longer chord length results in longer cover plates, which are mounted on the outer surface of a first stage tire building drum. Because the cover plates are longer, flexing or bending about their longitudinal axis may occur during the stitching operation. The stitching operation presses a gear-like device to the tire component layers successively mounted on the tire building drum. The function of the stitching operation is to eliminate trapped air from between the tire component layers of the green tire, and to promote adhesion of the layers. If excessive flexing of the cover plates occur, the stitching operation may not be effective in removing the trapped air between the layers. This may ultimately result in a defective tire.

Thus a tire building drum which eliminates the problem of trapped air is desired.

JP-A- 60-196330 describes a tire building drum comprising a plurality of segments and a cover plate mounted on that segments wherein the cover plate has at least one rib aligned with the longitudinal axis of the cover plate. Other constructions of radially expansible tire building drums using a plurality of segments in a cylindrical array are described in US-A- 3,932,256, JP-A- 08-258 180 and JP-A- 11-309790.

### Summary of the Invention

The invention relates to a tire building drum according to claim 1.

In a further aspect, the invention provides a cover plate according to claim 6.

In a third aspect, the invention relates to the use of the building drum or of the cover plate.

Dependent claims relate to preferred embodiments of the invention.

### Brief Description of the Drawings

The invention will be described by way of example and with reference to the accompanying drawings in which:
Figure 1 is a perspective view of a first stage tire building drum;
Figure 2 is a cutaway view in the direction 2-2 of Figure 1;
Figure 2a is a cutaway view in the direction 2-2 of Figure 1, shown in the radially expanded condition;
Figure 3 is a perspective view of a coverplate of the present invention;
Figure 4 is a top view of the coverplate of the present invention shown in Figure 3;
Figure 5 is a side view of the coverplate of the present invention shown in Figure 3;
Figure 6 is an end view of the coverplate shown in Figure 3;
Figure 7 is a perspective view of a second embodiment of a coverplate of the present invention;
Figure 8 is an exploded, perspective view of the cover plate of Figure 7 and respective mounting plate;
Figure 9 is a top view of the coverplate of Figure 8;
Figure 10 is a cutaway view in the direction 10-10 of Figure 9;
Figure 11 is a cutaway view in the direction 11-11 of Figure 10.

### Detailed Description of the Invention

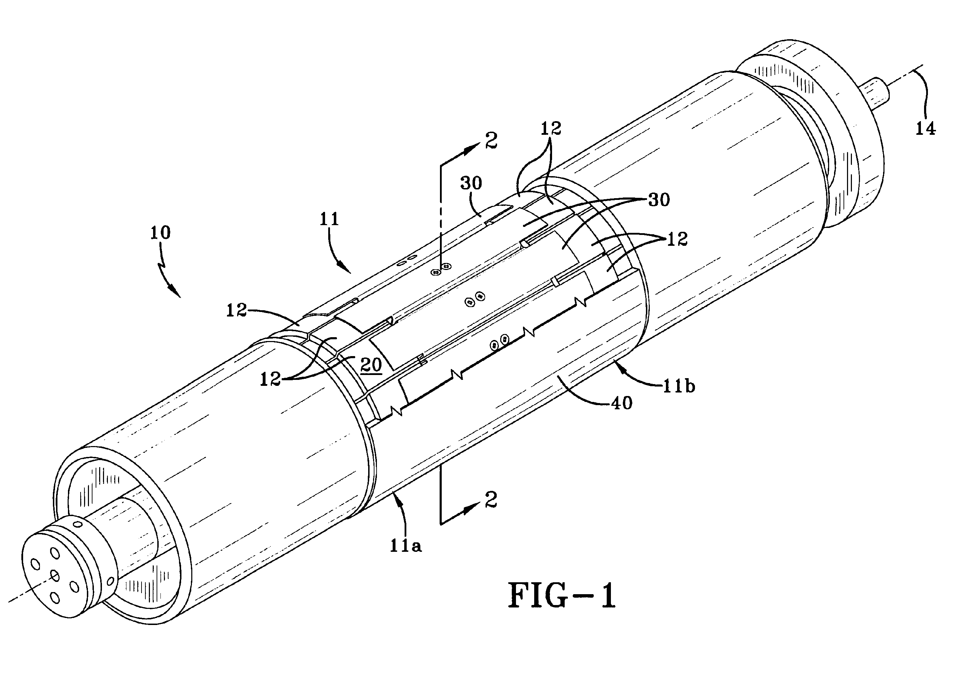

Turning to the drawings and in particular Figures 1-2, there is illustrated a first stage tire building drum 10 embodying improvements especially suited for building tires having a long chord length. The tire building drum 10 comprises a generally cylindrical shape and is rotatable about a longitudinal axis 14. The tire drum 10 has a center portion 11 for receiving successive layers of tire building components such as an inner liner, side walls, chafers, breakers, ply, and beads. The center portion 11 is also adapted to expand radially outward, in order to tighten up the tire building components over the wire beads and to turn up the ends over the beads. The center portion comprises a plurality of segments or fingers 12, which are radially actuatable. The segments 12 are arranged in a first and second cylindrical array about a drum axis 14 on each end 11 a, 11b of the drum. A plurality of cover plates 30 are positioned over the segments 12.

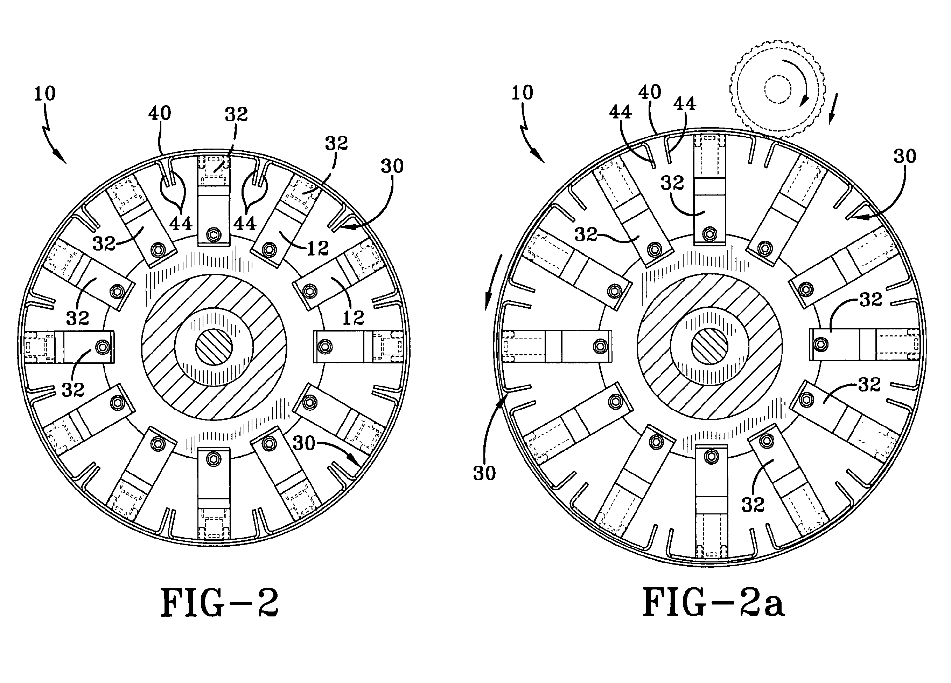

Each segment 12 has an upper mounting surface 20 for receiving a cover plate 30. Each segment 12 is radially actuatable via an air actuated piston (not shown) for moving the cover plates 30 radially outward. Cover plates 30 are mounted upon an upper mounting surface of a guide piston 32. The guide piston 32 functions to secure the coverplates to the drum and to allow the cover plates to move radially outward with the segments 12. Figure 2A illustrates a cross sectional view of the tire building drum 10 in the radially expanded position wherein all of the segments are in the expanded position. Figure 2 illustrates the tire building drum in the normal or retracted position.

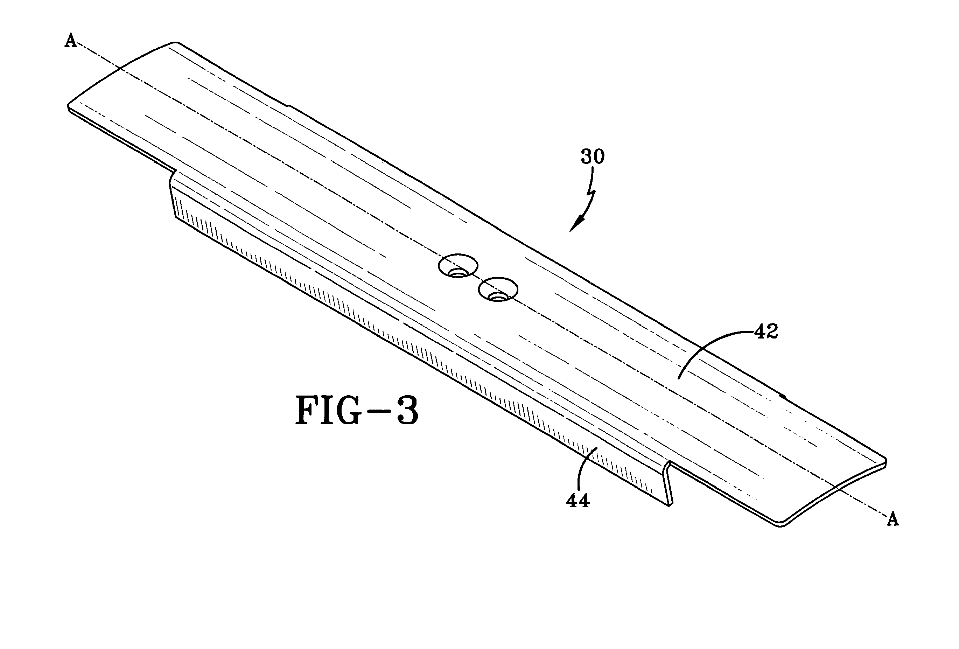

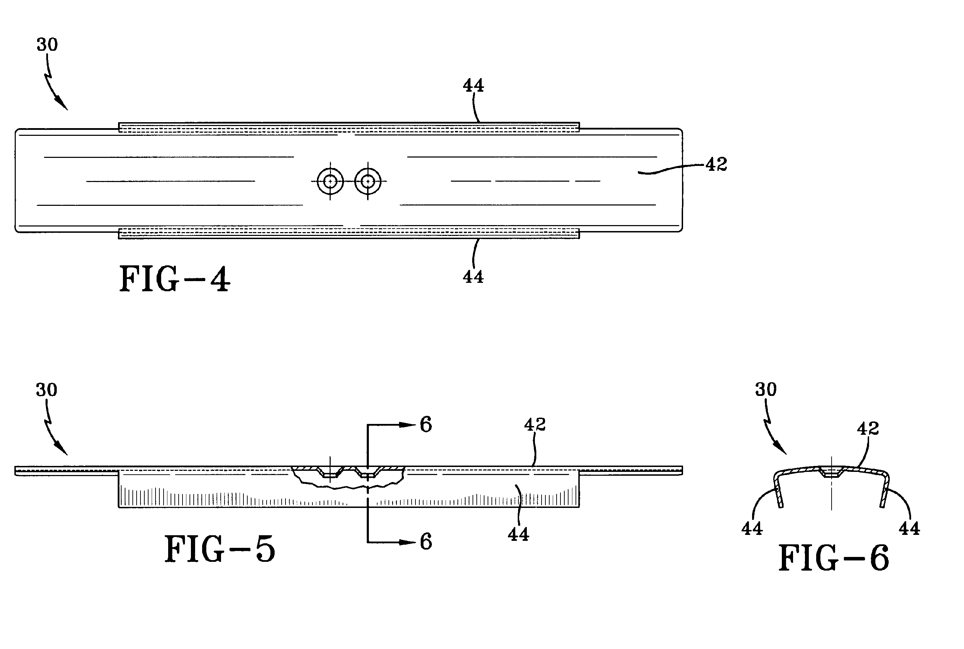

Figures 3-6 illustrate more details of the cover plate of a first embodiment of the present invention. The cover plate 30 is located below flexible center sleeve 40. The center sleeve 40 is typically comprised of an elastomer or rubber and functions to retract the segments, like a rubber band, to the collapsed position as shown in Figure 2. The cover plate 30 as shown in Figure 3 is generally rectangular in shape with its longitudinal axis A-A aligned with the longitudinal axis 14 of the tire building drum. The cover plate further includes a curved outer surface 42 and one or more ribs 44 that are preferably aligned with the longitudinal axis A-A of the cover plate. Preferably, there are two ribs 44 located on opposite ends of the cover plate as shown in the figures. In the preferred embodiment, the ribs 44 extend down as sidewalls from the cover plate, and are oriented at about a ninety degree angle such as 85-95 degree, preferably 90 degree, with respect to the outer surface 42. It is desired that the ribs 44 do not extend along the entire length of the cover plate in order to avoid interference with the segments 12.

In a second embodiment of the cover plate (not shown), the cover plate comprises a single rib aligned or parallel with the longitudinal axis A-A of the cover plate. Preferably, the single rib is located on the longitudinal axis. However, the rib may also be located on one end of the cover plate.

Ribs 44 function to increase the structural rigidity of the cover plate in order to prevent flexing of the cover plates during the stitching operation. Figure 2a illustrates a stitcher in contact with the cover plates 30 of the tire building drum.

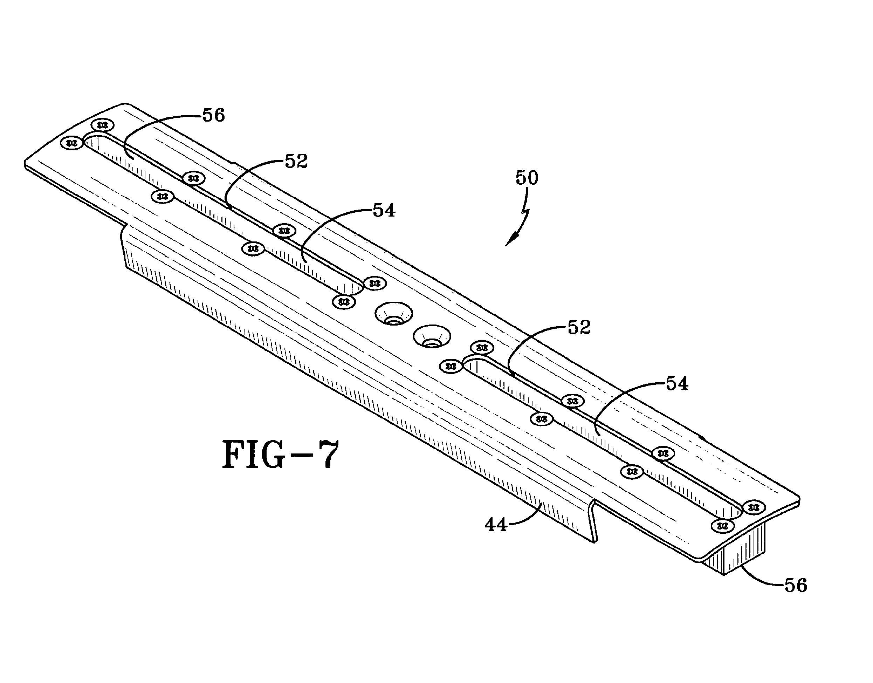

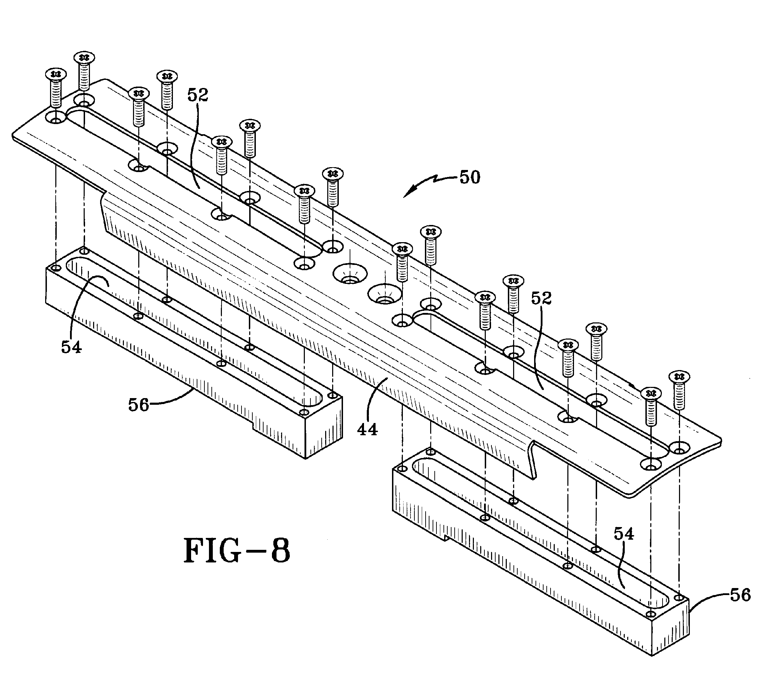

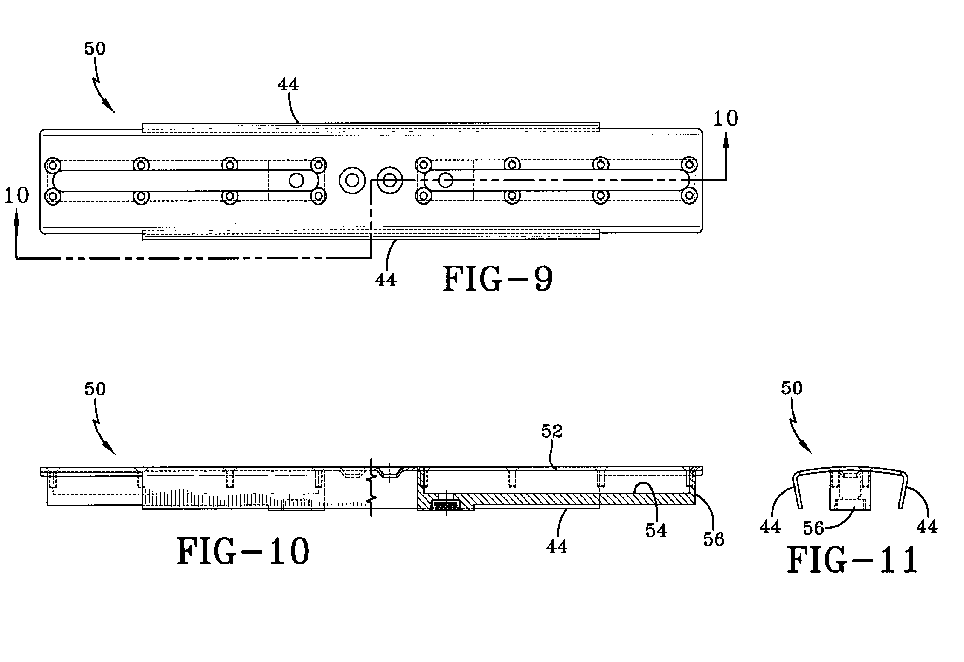

A third embodiment of the cover plate 50 is shown in Figures 7-11. The cover plate has one or more sidewalls extending down from the upper surface, wherein the sidewalls form longitudinal ribs 44. The cover plate 50 further comprises longitudinal slots 52 which together with the lots 54 of backing plate 56, form a manifold for vacuum. When the vacuum system (not shown) is turned on, the cover plates with slots hold the tire components onto the drum via suction.

## Claims

1. A tire building drum comprising a plurality of segments (12) in a cylindrical array, a cover plate (30, 50) mounted over each segment, wherein said cover plate (30, 50) has an upper surface having a first and second end, with two opposed sidewalls extending down from the ends of said upper surface, wherein said sidewalls are oriented at an angle in a range of from 85 to 95 degrees with respect to the upper surface and aligned with the longitudinal axis (A-A) of the cover plate (30, 50).

2. The tire building drum of claim 1 wherein the angle is 90 degrees.

3. The tire building drum of claim 1 wherein said cover plate has an upper curved surface.

4. The tire building drum of claim 1 wherein said segments are actuatable in the radial direction.

5. The tire building drum of claim 1 wherein the sidewalls do not extend along the entire length of the cover plate (30, 50).

6. A cover plate for use with a tire building drum, said cover plate (42) comprising an upper surface and two longitudinal ribs (44) connected to said upper surface, wherein said upper surface has a first and second end with the two longitudinal ribs (44) extending down as sidewalls from the ends of said upper surface, and wherein the sidewalls are oriented at an angle in a range of from 85 to 95 degrees with respect to the upper surface and are aligned with the longitudinal axis (A-A) of the cover plate (30, 50).

7. The cover plate of claim 6 wherein the angle is 90 degrees.

8. The cover plate of claim 6 or 7 wherein the sidewalls do not extend along the entire length of the cover plate (30, 50).

9. Use of the tire building drum (10) according to at least one of claims 1-5 or of the cover plate (30, 50) according to at least one of claims 6-8 to manufacture all terrain vehicle tires or aircraft tires.

## Patentansprüche

1. Reifenaufbautrommel, umfassend eine Mehrzahl von Segmenten (12) in einer zylindrischen Anordnung, eine über jedem Segment montierte Abdeckplatte (30, 50), wobei die Abdeckplatte (30, 50) eine Oberseite mit einem ersten und einem zweiten Ende aufweist, mit zwei gegenüberliegenden Seitenwänden, die sich von den Enden der Oberseite nach unten erstrecken, wobei die Seitenwände in einem Winkel in einem Bereich von 85 bis 95 Grad bezüglich der Oberseite orientiert und zur Längsachse (A-A) der Abdeckplatte (30, 50) ausgerichtet sind.

2. Reifenaufbautrommel nach Anspruch 1, wobei der Winkel 90 Grad beträgt.

3. Reifenaufbautrommel nach Anspruch 1, wobei die Abdeckplatte eine gekrümmte Oberseite aufweist.

4. Reifenaufbautrommel nach Anspruch 1, wobei die Segmente in der radialen Richtung betätigbar sind.

5. Reifenaufbautrommel nach Anspruch 1, wobei die Seitenwände sich nicht über die gesamte Länge der Abdeckplatte (30, 50) erstrecken.

6. Abdeckplatte zur Verwendung bei einer Reifenaufbautrommel, wobei die Abdeckplatte (42) eine Oberseite und zwei mit dieser Oberseite verbundene Längsrippen (44) umfasst, wobei die Oberseite ein erstes und ein zweites Ende aufweist, wobei die zwei Längsrippen (44) sich als Seitenwände von den Enden der Oberseite nach unten erstrecken, und wobei die Seitenwände in einem Winkel in einem Bereich von 85 bis 95 Grad bezüglich der Oberseite orientiert sind und zur Längsachse (A-A) der Abdeckplatte (30, 50) ausgerichtet sind.

7. Abdeckplatte nach Anspruch 6, wobei der Winkel 90 Grad beträgt.

8. Abdeckplatte nach Anspruch 6 oder 7, wobei die Seitenwände sich nicht über die gesamte Länge der Abdeckplatte (30, 50) erstrecken.

9. Verwendung der Reifenaufbautrommel (10) nach mindestens einem der Ansprüche 1-5 oder der Abdeckplatte (30, 50) nach mindestens einem der Ansprüche 6-8 zur Herstellung von Geländefahrzeugreifen oder Flugzeugreifen.

## Revendications

1. Tambour de confection de bandages pneumatiques comprenant plusieurs segments (12) en une configuration cylindrique, une plaque de recouvrement (30, 50) montée par-dessus chaque segment, ladite plaque de recouvrement (30, 50) possédant une surface supérieure comportant une première et une deuxième extrémité, deux flancs opposés s'étendant vers le bas à partir des extrémités de ladite surface supérieure, lesdits flancs étant orientés en formant un angle dans la plage de 85 à 95 degrés par rapport à la surface supérieure et étant disposés en alignement avec l'axe longitudinal (A-A) de la plaque de recouvrement (30, 50).

2. Tambour de confection de bandages pneumatiques selon la revendication 1, dans lequel l'angle forme 90 degrés.

3. Tambour de confection de bandages pneumatiques selon la revendication 1, dans lequel ladite plaque de recouvrement possède une surface courbe supérieure.

4. Tambour de confection de bandages pneumatiques selon la revendication 1, dans lequel lesdits segments peuvent être actionnés en direction radiale.

5. Tambour de confection de bandages pneumatiques selon la revendication 1, dans lequel les flancs ne s'étendent pas sur toute la longueur de la plaque de recouvrement (30, 50).

6. Plaque de recouvrement à utiliser avec un tambour de confection de bandages pneumatiques, ladite plaque de recouvrement (42) comprenant une surface supérieure et deux nervures longitudinales (44) reliées à ladite surface supérieure, ladite surface supérieure possédant une première et une deuxième extrémité, les deux nervures longitudinales (44) s'étendant vers le bas sous la forme de flancs à partir des extrémités de ladite surface supérieure, et dans laquelle les flancs sont orientés en formant un angle dans la plage de 85 à 95 degrés par rapport à la surface supérieure et étant disposés en alignement avec l'axe longitudinal (A-A) de la plaque de recouvrement (30, 50).

7. Plaque de recouvrement selon la revendication 6, dans laquelle l'angle forme 90 degrés.

8. Plaque de recouvrement selon la revendication 6 ou 7, dans laquelle les flancs ne s'étendent pas sur toute la longueur de la plaque de recouvrement (30, 50).

9. Utilisation du tambour de confection de bandages pneumatiques (10) selon au moins une des revendications 1 à 5 ou de la plaque de recouvrement (30, 50) selon au moins une des revendications 6 à 8, pour la fabrication de bandages pneumatiques tout-terrain de bandages pneumatiques pour aéroplanes.
